# EUROPEAN PATENT SPECIFICATION

(11) **EP 2 048 303 B1**
(45) Date of publication and mention of the grant of the patent: **30.12.2009**
(21) Application number: 08008492.4
(22) Date of filing: 06.05.2008
(51) Int. Cl.: E04D 13/08, F03B 13/00

(54) **Hydroelectric system**
Hydroelektrisches System
Système hydroélectrique

(30) Priority: 09.10.2007 SG 200716830
(43) Date of publication of application: 15.04.2009
(73) Proprietor: Dragon Energy Pte. Ltd., Singapore 048623 (SG)
(72) Inventor: Nightingale, Christopher George Edward, Singapore 259983 (SG)
(74) Representative: Hasler, Erich

(56) References cited:
- WO-A-2006/022551
- DE-A- 19 858 609
- DE-U1- 29 711 026
- GB-A- 2 312 711

## Description

### Field of the Invention

The present invention relates to a hydroelectric system, as defined by claim 1, for converting kinetic energy from water flowing off a roof of a building to electrical energy.

### Background of the Invention

It has been previously proposed to incorporate a hydroelectric system to generate electricity from rain runoff from a roof. For example such a system is described in utility model no. DE-U-29711026 which discloses a rainwater powered electricity generation system having a storage tank that acts a reservoir to store rain water from a roof. When the level within the reservoir reaches a predetermined level, a valve automatically opens allowing the water to drain through a down pipe to drive a turbine which in turn drives a generator to produce electricity.

It is to be understood that, if any prior art publication is referred to herein, such reference does not constitute an admission that the publication forms a part of the common general knowledge in the art, in Australia or any other country.

### Summary of the Invention

According to the present invention there is provided a hydroelectric system for converting kinetic energy from water flowing off a roof of a building into electrical energy, the system comprising:
a turbine having a rotor;
at least one down pipe having an upper end for receiving the water, the down pipe further comprising at least two channels, each channel extending from the upper end to a respective outlet, each outlet disposed to direct water flowing therefrom on to the rotor to cause rotation of the rotor in the same direction, the channels being configured in a manner so that at least one channel can overflow into another channel.

Respective adjacent channels may be provided with corresponding upper edges of progressively increasing height whereby water overflowing the upper edge of one channel flows into an adjacent channel.

At least two of the channels may be provided with different hydraulic diameters. In one embodiment, the hydraulic diameter of a first of the channels into which water entering the down pipe initially flows is smaller than the hydraulic diameter of other channels.

In one embodiment, the rotor comprises an Archimedes screw having an axis of rotation parallel to a direction of flow of water from the channels.

The hydroelectric system may further comprise one or more gutters configured to receive water flowing from the roof and directing the water into the or each down pipe; and one or more roof channels, each roof channel disposed on the roof and extending from diagonally from an upper portion of the roof to the gutter.

The system may further comprise one or more water storage tanks in fluid communication with the or each down pipe for storing water that passes through the down pipe.

The down pipe may be further provided with a water flow regulating reservoir for at least one of the channels, the reservoir comprising an outlet in fluid communication with that channel, the outlet formed at a location below the upper edge of that channel and dimensioned to regulate flow of water collected in a reservoir down that channel. Each reservoir may be formed between a first wall of that channel, the first wall constituting the upper edge of that channel and a second wall spaced from the first wall, the second wall having an upper edge located below the upper edge of the first wall and wherein the outlet is formed in the second wall below the upper edge of the second wall.

### Brief Description of the Drawings

An embodiment of the present invention will now be described by way of example only with reference to the accompanying drawings in which:
Figure 1 is a schematic representation of an embodiment of the hydroelectric system in accordance with the present invention;
Figure 2 is a top elevation view of a down pipe incorporated in the hydroelectric system; and,
Figure 3 is a side elevation view of the hydroelectric system.

### Detailed Description of the Preferred Embodiment

The accompanying drawings illustrate an embodiment of a hydroelectric system 10 in accordance with the present invention for converting kinetic energy from water flowing off a roof 12 of a building 14 into electrical energy. The system 10 comprises a turbine 16 having a rotor 18 and a generator 19 which is driven by the rotor 18, and at least one down pipe 20 having an upper end 22 for receiving the water run off from the roof 12. The down pipe 20 comprises channels 24a and 24b (hereinafter referred to in general as "channels 24") that extend from the upper end 22 to respective outlets 26a and 26b (hereinafter referred to in general as "outlets 26"). Each of the outlets 26 is disposed to direct water flowing therefrom onto the rotor 18 to cause rotation of the rotor 18 in the same direction. As explained in greater detail below, the channels 24 are further configured in a manner so that the channel 24a overflows into the channel 24b.

Upper and lower fixing rings 21a and 21b hold the turbine 16 in place within the down pipe 22 as the rotor 18 rotates. One or both of the rings may also be used to rotate cables 50 between the generator 19 and an energy management system or storage device (neither shown).

The system 10 further comprises a gutter 28 that receives the water from the roof 12 and directs that water into the down pipe 20. The channels 24a and 24b are configured in a manner so that water entering the down pipe 20 initially flows through the channel 24a and out from the outlet 26a onto the rotor 18 to drive the generator 19. However in a heavy downpour the channel 24a may overflow into the channel 24b. The overflow water then flows through the channel 24b through the outlet 26b to turn the rotor 18 thereby providing further drive to the generator 19.

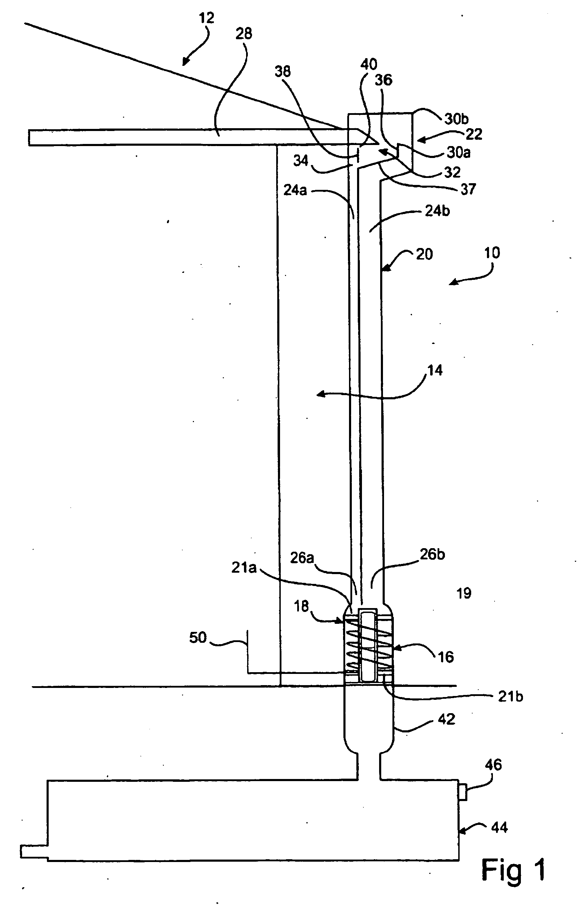

The overflow of water from channel 24a to 24b is facilitated by forming the channels 24 with respective upper edges of progressively increasing height whereby water overflowing the upper edge of one channel, for example channel 24a, can subsequently flow into the adjacent channel 24b. In this regard, it can be seen from Figure 1 that the channel 24a has an upper edge 30a while the channel 24b has an upper edge 30b which is higher than the upper edge 30a. Thus, if the channel 24a fills with water and overflows, the overflow flows over the upper edge 30a into the channel 24b. It will be appreciated that if for example the down pipe 20 where provided with a further third channel, water would flow into the third channel after water has overflowed both the upper edge 30a of the first channel 24a and the upper edge 30b of the second channel 24b.

In order to provide a controlled steady flow of water through the channel 24a, the upper end 22 of the down pipe 20 is provided with a water flow regulating reservoir 32. The reservoir 32 comprises an upright wall 36 that incorporates the upper edge 30a of the channel 24a, a base 37 that slopes downward, and a second upright wall 38 spaced from the wall 36.

The reservoir 32 is provided with two outlets to the channel 24a. A first outlet 34 comprises a slot or series of holes formed in the wall 38 near its junction with the base 37. The second outlet, which is spaced above the first outlet, is simply a slot 40 formed near an upper end of the wall 38. The slot 40 in effect constitutes a spill way to the channel 24a. Thus when water collects in the reservoir at a level below the slot 40 it flows into the channel 24a via the first outlet 34. The outlet 34 is dimensioned to provided a steady continuous stream of water down the channel 24a when a head of water is contained within the reservoir 32. If rainwater volume increases sufficiently water will initially flow through the slot 40 and flow into the channel 24a providing additional pressure to drive the turbine 16. Should the water level in the reservoir 32 increase at a sufficiently greater rate than it flows out from the outlet 34 and through the slot 40 it may then overflow the edge 30a to flow down the second channel 24b.

The channels 24 may be provided with either the same or different hydraulic diameter. However, in a preferred embodiment the channel 24a may have a smaller hydraulic diameter than the channel 24b. The selection of the hydraulic diameter for the channel 24a, the size of the opening 34, and the volume of the reservoir 32 may be selected to provide a constant flow of water through the channel 24a.

Water flowing through the down pipe 20 and through the rotor 18 can flow via a tail portion 42 of the down pipe 20 into a water tank 44. The water tank 44 may be disposed either on the ground or underground. The tank 44 stores rainwater which can be used for various purposes including non potable uses such as watering of a garden, cleaning outdoor areas, washing machines and dishwashers, or alternately with the provision of appropriate filters, used for drinking water. Additionally, the water in the tanks 44 may be pumped through a solar heating system to provide either heated water for use within the building 14 such as for showers and washing machines, or alternately pumped through radiators for heating purposes. In such embodiments, pumping of the water from the tank 44 may ideally be powered by electricity generated by solar cells on the roof 12. The tank 44 may also be provided with an overflow valve 46 that is configured to open to allow excess water to drain from the tank 44 if the water pressure on the tank 44 is above a predetermined level that would be exceeded prior to the entirety of the down pipe 20 being filled with water.

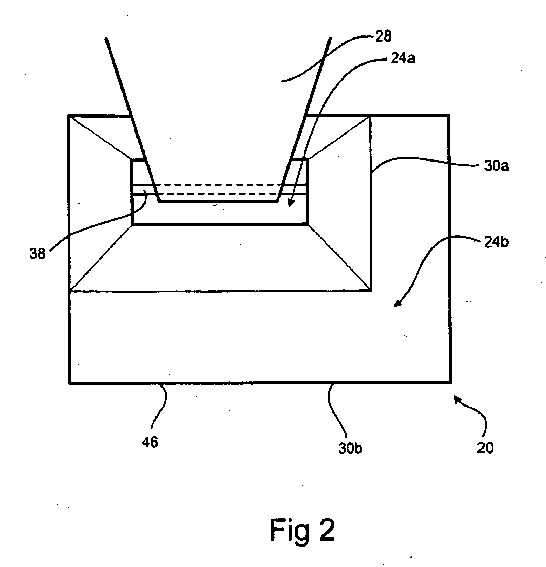

Figure 2 illustrates a particular configuration of a down pipe 20 where the channel 24a comprises in effect a pipe within the down pipe. The gutter 28 feeds water directly to the mouth or opening of the channel 24a which, when completely filled with water, can overflow into the channel 24b which constitutes the region of the down pipe 20 between the outside of the channel 24a and the inside of an outer pipe 46 defining the down pipe 20.

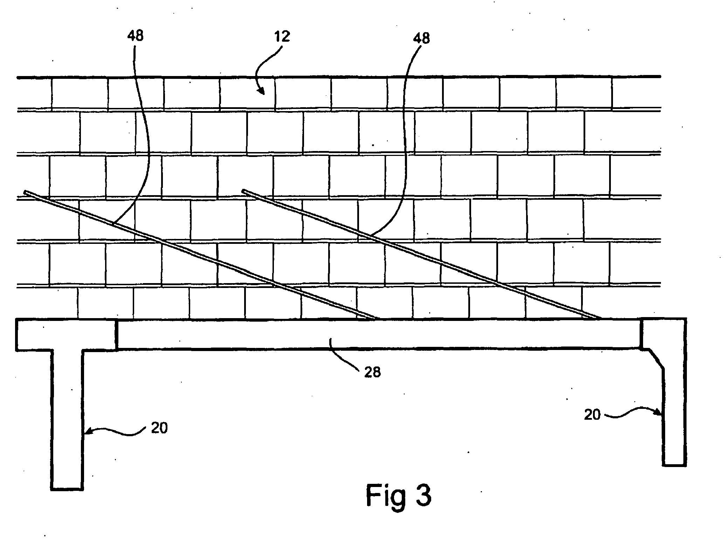

Referring to Figure 3, it can further be seen that the hydroelectric system 10 may also include one or more roof channels 48 that extend diagonally from an upper portion of the roof 12 to the gutter 28. The roof channels 48 act to direct rain running of the roof 12 to flow in a direction at an acute angle to the direction of flow of water in the gutter 28. This provides added momentum or velocity to the water in the gutter 28 to thereby increase its kinetic energy. Depending on the state of the reservoir 32 and the size of the opening 34, the increase in kinetic energy provided to the water may provide greater electrical energy output from the turbine.

Electricity generated by the turbine 16 can be fed via the cable 50 to a power management system that may include a storage battery for storing the electricity. The management system may then manage the power generated by the turbine 16 to supply the power to appliances within the building 14 or even to deliver the power to a mains grid.

Now that an embodiment of the invention has been described in detail it will be apparent to those skilled in the relevant arts that numerous modifications and variations may be made without departing from the basic inventive concepts. For example, system 10 depicts a down pipe being divided into two channels 24a and 24b. However as previously mentioned, the down pipe 20 can be divided into more than two channels. Further, while it is believed that a rotor 18 in the form of an Archimedes screws may constitute a most efficient form of rotor, however the wheels or propellers may be used. Also the second outlet of the reservoir 32 which is described above, and shown, as a slot 40 can take alternate forms. For example the wall 38 can be simply made of a height equal to the bottom of the slot 40, so that the upper most edge of the wall 38 acts as a dam wall over which water flows. In a further variation the slot 40 can be replaced with a plurality of holes at the same height in the wall 38.

All such modifications and variations are deemed to be within the scope of the present invention the nature of which is to be determined from the above description.

In the claims of this application and in the description of the invention, except where the context requires otherwise due to express language or necessary implication, the words "comprise" or variations such as "comprises" or "comprising" are used in an inclusive sense, i.e. to specify the presence of the stated features but not to preclude the presence or addition of further features in various embodiments of the invention.

## Claims

1. A hydroelectric system (10) for converting kinetic energy from water flowing off a roof (12) of a building into electrical energy, the system comprising:
a turbine (16) having a rotor (18);
at least one down pipe (20) having an upper end (22) for receiving the water, the down pipe further comprising at least two channels (24a, 24b), each channel extending from the upper end to a respective outlet (26a, 26b), each outlet disposed to direct water flowing there from on to the rotor (18) to cause rotation of the rotor in the same direction, the channels being configured in a manner so that at least one channel can overflow into another channel.

2. The hydroelectric system (10) according to claim 1 wherein adjacent channels are provided with corresponding upper edges of progressively increasing height whereby water overflowing the upper edge of one channel flows into an adjacent channel.

3. The hydroelectric system (10) according to claim 1 or 2 wherein the channels are provided with different hydraulic diameters.

4. The hydroelectric system (10) according to claim 3 wherein the hydraulic diameter of a first of the channels into which water entering the down pipe initially flows is smaller than the hydraulic diameter of other channels.

5. The hydroelectric system (10) according to any one of claims 1 - 4 further comprising one or more gutters (28) configured to receive water flowing from the roof and directing the water into the or each down pipe (20); and one or more roof channels (48), each roof channel disposed on the roof and extending from diagonally from an upper portion of the roof to the gutter.

6. The hydroelectric system (10) according to any one of claims 1 - 5 further comprising a water flow regulating reservoir (32) for at least one of the channels, the reservoir comprising an outlet in fluid communication with that channel, the outlet formed at a location below the upper edge of that channel and dimensioned to regulate flow of water collected in a reservoir down that channel.

7. The hydroelectric system (10) according to claim 6 wherein each reservoir (32) is formed between a first wall of that channel, the first wall constituting the upper edge of that channel and a second wall spaced from the first wall, the second wall having an upper edge located below the upper edge of the first wall and wherein the outlet is formed in the second wall below the upper edge of the second wall.

8. The hydroelectric system (10) according to any one of claims 1 - 7 wherein the rotor (18) comprises an Archimedes screw having an axis of rotation parallel to a direction of flow of water from the channels.

9. The hydroelectric system (10) according to any one of claims 1 - 8 further comprising one or more water storage tanks (44) in fluid communication with the or each down pipe (20) for storing water that passes through the down pipe.

## Patentansprüche

1. Hydroelektrisches System (10) zur Umwandlung von kinetischer Energie von Wasser, welches von einem Dach (12) eines Gebäudes abfliesst, in elektrische Energie, umfassend
- eine Turbine (16) mit einem Rotor (18), und
- zumindest ein Fallrohr (20), welches ein oberes Ende (22) zur Wasseraufnahme mit zumindest zwei Kanälen (24a,24b) hat, welche sich vom oberen Ende zu entsprechenden Auslässen (26a,26b) erstrecken, und
jeder Auslass derartig angeordnet ist, dass der aus dem Auslass austretenden Wasserstrahl auf den Rotor (18) gelenkt ist, um eine Rotation des Rotors (18) in dieselbe Richtung zu bewirken und die Kanäle derartig angeordnet sind, dass zumindest ein Überfluss von einem Kanal in den anderen Kanal ermöglicht ist.

2. Hydroelektrisches System (10) gemäss Anspruch 1, **dadurch gekennzeichnet, dass** angrenzende Kanäle mit korrespondierenden Oberkanten mit zunehmend steigender Höhe ausgestattet sind, wobei die Oberkante überfliessendes Wasser eines Kanals in den angrenzenden Kanal fliesst.

3. Hydroelektrisches System (10) gemäss einem der Ansprüche 1 oder 2, **dadurch gekennzeichnet, dass** die Kanäle verschiedene hydraulische Durchmesser besitzen.

4. Hydroelektrisches System (10) gemäss Anspruch 3, **dadurch gekennzeichnet, dass** der hydraulische Durchmesser des ersten der Kanäle, durch welchen das Wasser in das Fallrohr zuerst eintritt, kleiner ist als der hydraulische Durchmesser des anderen Kanals.

5. Hydroelektrisches System (10) gemäss einem der Ansprüche 1 bis 4, **dadurch gekennzeichnet, dass** das hydroelektrische System zusätzlich ein oder mehrere Regenrinnen (28) besitzt, welche zur Aufnahme von Wasser, welches vom Dach fliesst, ausgebildet sind und das Wasser in das oder jedes Fallrohr (20) leiten und einen oder mehrere Dachkanäle (48) besitzt, welche auf dem Dach angeordnet sind und sich diagonal von einem oberen Teil des Daches zu der Regenrinne erstrecken.

6. Hydroelektrisches System (10) gemäss einem der Ansprüche 1 bis 5, **dadurch gekennzeichnet, dass** das hydroelektrische System zusätzlich ein Reservoir (32) zur Wasserflusskontrolle für zumindest einen der Kanäle besitzt, das Reservoir einen Auslass besitzt, welcher in Flüssigkeitsverbindung mit dem Kanal steht, und der Auslass unter der Oberkante des Kanals ausgebildet ist und dimensioniert ist, um den Fluss des Wassers, welches in dem Reservoir gesammelt ist, beim Hinabfliessen des Kanals zu regulieren.

7. Hydroelektrisches System (10) gemäss Anspruch 6, **dadurch gekennzeichnet, dass** jedes Reservoir (32) zwischen einer ersten Wand, welche die Oberkante des Kanals bildet, und einer zweiten Wand, beabstandet von der ersten Wand, ausgebildet ist, und die zweite Wand eine Oberkante besitzt, welche unter der Oberkante der ersten Wand angeordnet ist und in welcher zweiten Wand der Auslass unter der Oberkante der zweiten Wand ausgebildet ist.

8. Hydroelektrisches System (10) gemäss einem der Ansprüche 1 bis 7, **dadurch gekennzeichnet, dass** der Rotor (18) eine Archimedische Schraube besitzt, welche eine Rotationsachse hat und die Rotationsachse parallel zur Flussrichtung des Wassers aus dem Kanal ausgerichtet ist.

9. Hydroelektrisches System (10) gemäss einem der Ansprüche 1 bis 8, **dadurch gekennzeichnet, dass** das hydroelektrische System zusätzlich einen oder mehrere Wasserspeichertanks (44) besitzt, welche in Flüssigkeitskontakt mit dem oder jedem Fallrohr (20) stehen, um Wasser zu speichern, welches durch das Fallrohr fliesst.

## Revendications

1. Système hydroélectrique (10) pour convertir de l'énergie cinétique provenant de l'eau qui s'écoule d'un toit (12) d'un bâtiment en énergie électrique, le système comprenant :
une turbine (16) ayant un rotor (18),
au moins un tuyau de descente (20) ayant une extrémité supérieure (22) pour recevoir l'eau, le tuyau de descente comprenant de plus au moins deux canaux (24a, 24b), chaque canal (24a, 24b) s'étendant de l'extrémité supérieure à une sortie respective (26a, 26b), chaque sortie étant disposée pour diriger l'eau qui s'écoule à partir de là vers le rotor (18) pour provoquer la rotation du rotor dans la même direction, les canaux étant configurés de manière à ce qu'au moins un canal peut déborder dans l'autre canal.

2. Système hydroélectrique (10) selon la revendication 1 dans lequel des canaux adjacents sont prévus avec des arêtes supérieures correspondantes d'une hauteur progressivement croissante, l'eau débordant de l'arête supérieure d'un canl s'écoulant dans un canal adjacent.

3. Système hydroélectrique (10) selon la revendication 1 ou 2 dans lequel les canaux sont prévus avec différents diamètres hydrauliques.

4. Système hydroélectrique (10) selon la revendication 3 dans lequel le diamètre hydraulique d'un premier canal dans lequel l'eau qui entre dans le tuyau de descente s'écoule initialement est plus petit que le diamètre hydraulique d'autres canaux.

5. Système hydroélectrique (10) selon l'une quelconque des revendications 1 à 4 comprenant une ou plusieurs gouttières (28) configurées pour recevoir de l'eau qui s'écoule du toit et dirigeant l'eau dans ou chaque tuyau (20) et un ou plusieurs canaux de toit (48), chaque canal de toit étant disposé sur le toit et s'étendant d'en diagonale d'une portion supérieure du toit à la gouttière.

6. Système hydroélectrique (10) selon l'une quelconque des revendications 1 à 5 comprenant de plus un réservoir (32) régulant le flux d'eau pour au moins l'un des canaux, le réservoir comprenant une sortie en communication fluide avec ce canal, la sortie étant formée à un endroit en dessous de l'arête supérieure de ce canal et dimensionnée pour réguler le flux d'eau collecté dans un réservoir en dessous de ce canal.

7. Système hydroélectrique (10) selon la revendication 6 dans lequel chaque réservoir (32) est formé entre une première paroi de ce canal, la première paroi constituant l'arête supérieure de ce canal et une seconde paroi espacée de la première paroi, la seconde paroi ayant une arête supérieure située en dessous de l'arête supérieure de la première paroi et dans lequel la sortie est formée dans la seconde paroi en dessous de l'arête supérieure de la seconde paroi.

8. Système hydroélectrique (10) selon l'une quelconque des revendications 1 à 7 dans lequel le rotor (18) comprend une vis d'Archimède ayant un axe de rotation parallèle à une direction du flux d'eau des canaux.

9. Système hydroélectrique (10) selon l'une quelconque des revendications 1 à 8 comprenant un ou plusieurs réservoirs de stockage d'eau (44) en communication fluide avec le ou chaque tuyau de descente (20) pour stocker de l'eau qui traverse le tuyau de descente.
